# EUROPÄISCHE PATENTSCHRIFT

(11) **EP 3 380 664 B1**
(45) Veröffentlichungstag und Bekanntmachung des Hinweises auf die Patenterteilung: **24.04.2019**
(21) Anmeldenummer: 16798426.9
(22) Anmeldetag: 09.11.2016
(51) Int. Cl.: D06N 7/00

(54) **BINDEMITTEL FÜR TEPPICHBESCHICHTUNGS-ZUSAMMENSETZUNGEN**
BINDER FOR CARPET COATING COMPOSITIONS
LIANT POUR COMPOSITIONS D'ENDUCTION DE TAPIS

(30) Priorität: 24.11.2015 DE 102015223233
(43) Veröffentlichungstag der Anmeldung: 03.10.2018
(73) Patentinhaber: Wacker Chemie AG, 81737 München (DE)
(72) Erfinder: MELCHIN, Timo, 84561 Mehring (DE); KÖGLER, Gerhard, 84508 Burgkirchen (DE); KÜNSTLE, Holger, 84489 Burghausen (DE)
(74) Vertreter: Schuderer, Michael
(86) Internationale Anmeldenummer: PCT/EP2016/077030
(87) Internationale Veröffentlichungsnummer: WO 2017/089127

(56) Entgegenhaltungen:
- DE-T2- 69 201 426
- US-B1- 6 359 076

## Beschreibung

Die Erfindung betrifft Bindemittel für Teppichbeschichtungs-Zusammensetzungen, damit erhältliche Teppichbeschichtungs-Zusammensetzungen und Teppiche, welche mit solchen Teppichbeschichtungs-Zusammensetzungen beschichtet sind.

Bei der Herstellung von typischen, kommerziell erhältlichen Teppichen, beispielsweise Bahnware oder Teppichfliesen, wird der Teppichflor aus Faserbüscheln (Tufts) gebildet, welche beispielsweise in Form von Schlaufen maschinell in ein gewebtes oder gelegtes Trägermaterial (primary backing) gesteckt werden. Die Schlaufen sind dabei nur lose mit dem flächigen Trägermaterial verbunden (Tufting-Teppich) und werden daher zur Stabilisierung des Rohteppichs mit einer bindemittelhaltigen Formulierung (Teppichbeschichtungs-Zusammensetzung) behandelt. Diese wird geschäumt oder ungeschäumt auf die Rückseite des Trägermaterials aufgetragen (Vorstrich oder Precoat) und enthält neben einer wässerigen Polymerdispersion als Bindemittel typischerweise noch Füllstoffe, wie beispielsweise Kreide, und gegebenenfalls weitere Zusatzstoffe, wie Verdicker, Dispergierhilfsmittel oder Schaumhilfsmittel.

Die so erhaltenen Teppich-Produkte können zur Verbesserung der Dimensionsstabilität mit einem weiteren Trägermaterial (Teppichrücken, secondary backing) ausgerüstet werden. Dabei handelt es sich im Allgemeinen um ein Gewebe aus Kunstfaser, wie Polypropylen, Polyamid oder Polyester, oder aus Naturfaser, wie Jute. Zur Anbindung des Teppichrückens an den nach dem Vorstrich erhaltenen Teppich wird erneut ein Bindemittel aufgetragen, welches ähnlich formuliert sein kann wie die Teppichbeschichtungs-Zusammensetzung des Vorstrichs. Auch in dieser zweiten Beschichtung können die vorgenannten wässerigen Polymerdispersionen, als Schaum oder ungeschäumt formuliert, mit Füllstoffen und weiteren Zusatzstoffen, wie Verdicker, Dispergierhilfsmittel oder Schaumhilfsmittel aufgetragen werden (Zweitstrich oder secondary coating).

Vinylacetat-Ethylen-Copolymerisate, ob rein schutzkolloidstabilisiert, rein emulgatorstabilisiert oder mischstabilisiert, werden zunehmend in Teppichbeschichtungs-Zusammensetzungen als Bindemittel eingesetzt. Dabei zeichnen sich diese Copolymerisate mit variierender Glasübergangstemperatur und damit variierendem Ethylen-Anteil im Copolymerisat durch gute mechanische Eigenschaften im vollständig ausgerüsteten Teppich aus. Sowohl Noppenauszugskräfte, als auch Trennfestigkeiten lassen sich vergleichbar mit Standardbindemitteln auf der Basis von Styrol-Butadien-Copolymerdispersionen unter trockenen Prüfbedingungen formulieren. Die mechanischen Prüfungen nach Wasserlagerung als Modellprüfung für Reinigungs- und Feuchtigkeitsbelastung von Teppichen zeigen aber oft niedrigere Werte als Teppichbeschichtungs-Zusammensetzung basierend auf Styrol-Butadien-Latex.

Ursachen für einen Einbruch der Eigenschaftsprofile können in der Porosität der Beschichtung, der daraus resultierenden Porengrößenverteilung, der Hydrophilie des Bindemittels, der Füllstoffverteilung selbst und dem Kohäsions- und Adhäsionsvermögen des Bindemittels gegenüber den Bestandteilen des Teppichaufbaus (Flor und Rückenbeschichtung) liegen. Im Falle einer hohen Porosität und einer breiten Porengrößenverteilung, die aus dem Schaumauftrag der Teppichbeschichtungs-Zusammensetzung herrührt, ist auch die kapillare Wasseraufnahme der Beschichtungsmasse hoch, und die damit einhergehende Schwächung der Beschichtung führt zur Verringerung der Kohäsion und in Konsequenz zum vorzeitigen Bruch oder Reißen unter mechanischer Belastung. Die kapillare Wasseraufnahme lässt sich durch geschickte Wahl der Formulierungsbestandteile und der Auftragsparameter reduzieren beziehungsweise optimieren. Davon unverändert bleibt der Verlust der Adhäsion unter Wasserlagerung. Die geringere Adhäsion äußert sich besonders im Verlust an mechanischer Festigkeit bei Messungen der Trennfestigkeiten.

In der US 6,359,076 B1 werden Teppiche mit verbesserter Nassfestigkeit mit einer Teppichrücken-Beschichtungszusammensetzung erhalten basierend auf einer wässerigen Dispersion eines Vinylacetat-Ethylen-Copolymerisats mit OH-funktionellen Comonomereinheiten in Kombination mit einem Vernetzungsmittel aus der Gruppe der multifunktionellen Aziridine, der multifunktionellen Isocyanate und der multifunktionellen Epoxide.

In der WO 2014/031579 A2 wird vorgeschlagen zur Verbesserung der Nassfestigkeit von Teppichen eine Teppichrücken-Beschichtungszusammensetzung einzusetzen, welche auf einer Vinylacetat-Ethylen-Copolymer-Dispersion basiert und mit einem Ethylen-Acrylsäure-Copolymer, gegebenenfalls unter Zusatz von Vernetzer, modifiziert wird.

Die WO 2014/052143 A1 beschreibt wässerige Vinylacetat-Ethylen-Copolymer-Dispersionen, welche in einer Teppichrücken-Beschichtungszusammensetzung zur Verbesserung der Nassfestigkeit von damit ausgerüsteten Teppichen führen. Dies wird damit erreicht, dass zur Stabilisierung der Copolymer-Dispersion ein Gemisch aus teilverseiftem und vollverseiftem Polyvinylalkohol mit jeweils hoher Höppler-Viskosität verwendet wird.

Aus der US 4,126,415 ist bekannt, dass Polyethylenimine zur Antistatik-Ausrüstung von Teppichen geeignet sind. Dazu werden die Teppichfasern einer elektrischen Funkenentladung ausgesetzt, dann mit einer wässerigen Lösung eines Polyethyleniminsalzes besprüht und anschließend getrocknet. Aus der WO 2014/070818 A1 sind 2K-Primerzusammensetzungen bekannt, welche in einer Komponente A) ein Vinylacetat-Ethylen-Copolymer, einen Acrylattackifier und Polyethylenimin und in der zweiten Komponente B) Epoxyharz enthalten.

In der DE 69201426 T2 wird ein wässriges Hochleistungskontaktklebemittel beschrieben, welches eine wässrige Emulsion, beispielsweise eines Vinylacetat-Ethylen-Polymer, enthält und Polyethylenimin und thermoplastische Mikrohohlkugeln.

Es bestand die Aufgabe eine Teppichbeschichtungsmittel-Zusammensetzung auf der Basis einer wässerigen Vinylacetat-Ethylen-Copolymer-Dispersion zur Verfügung zu stellen, welche ohne die Notwendigkeit der Copolymerisation von funktionellen Comonomeren oder dem Einsatz von speziellen Stabilisatorsystemen, bei deren Einsatz zur Herstellung von Teppichen, zur Verbesserung der mechanischen Festigkeiten des Teppichs nach Wasserlagerung führt.

Gegenstand der Erfindung ist die Verwendung einer wässerigen Dispersion eines Vinylacetat-Ethylen-Copolymerisats und mindestens eines Polyethylenimins als Bindemittel in einer Teppichbeschichtungs-Zusammensetzung zur Herstellung von Teppichen.

Geeignete Polyethylenimine sind Polymere mit der sich wiederholenden Struktureinheit -CH₂-CH₂-NH- und mit einem gewichtsmittleren Molekulargewicht (bestimmt mittels GPC) von vorzugsweise 500 bis 1000000 g/mol, besonders bevorzugt 10000 bis 1000000 g/mol. Solche Polyethylenimine sind im Handel erhältlich, beispielsweise unter dem Handelsnamen Lupasol^{R} von der Firma BASF SE. Die Polyethyleneimine sind in der Teppichbeschichtugs-Zusammensetzung in einer Menge von 0,1 bis 10 Gew.-%, vorzugsweise 0,5 bis 5 Gew.-%, jeweils bezogen auf das Trockengewicht des Vinylacetat-Ethylen-Copolymerisats enthalten (trocken/trocken) .

Das Vinylacetat-Ethylen-Copolymerisat wird mittels radikalisch initiierter Emulsionspolymerisation in wässerigem Medium von 60 bis 98 Gew.-% Vinylacetat und 2 bis 30 Gew.-% Ethylen, vorzugsweise 75 bis 95 Gew.-% Vinylacetat und 5 bis 25 Gew.-% Ethylen, jeweils bezogen auf das Gesamtgewicht der Monomere, erhalten. Gegebenenfalls können noch bis zu 10 Gew.-%, vorzugsweise 0,1 bis 10 Gew.-%, jeweils bezogen auf das Gesamtgewicht der Monomere, weitere Comonomere copolymerisiert werden. Die Angaben in Gew.-% für die Comonomere addieren sich jeweils auf 100 Gew.-%.

Geeignete weitere Comonomere sind solche aus der Gruppe der Vinylester mit 3 bis 12 C-Atomen im Carbonsäurerest wie Vinylpropionat, Vinyllaurat, Vinylester von alpha-verzweigten Carbonsäuren mit 8 bis 11 C-Atomen wie VeoVa^{R}EH, VeoVa^{R}9 oder VeoVa^{R}10 (Handelsnamen der Fa. Resolution). Geeignet sind auch Methacrylsäureester oder Acrylsäureester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Geeignet sind auch Vinylhalogenide wie Vinylchlorid.

Geeignete weitere Comonomere sind auch ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids oder des N-Methylolmethacrylamids und des N-Methylolallylcarbamats. Geeignet sind auch Monomere mit Hydroxy- oder Carboxyl-Gruppen, wie beispielsweise Methacrylsäure- und Acrylsäurehydroxyalkylester wie Hydroxyethyl-, Hydroxypropyl- oder Hydroxybutylacrylat oder -methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3-Di(acetacetoxy)-propylmethacrylat und Acetessigsäureallylester.

Geeignete weitere Comonomere sind auch epoxidfunktionelle Comonomere wie Glycidylmethacrylat, Glycidylacrylat, Allylglycidether, Vinylglycidether. Weitere Beispiele für geeignete weitere Comonomere sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, vorzugsweise mit Alkyl- bzw. Alkoxygruppen mit jeweils 1 bis 2 C-Atomen, beispielsweise Vinyltrimethoxysilan, Vinyltriethoxysilan, 3-Methacryloxypropyltrimethoxysilan.

Besonders bevorzugt werden keine weiteren Comonomere copolymerisiert.

Die Monomerauswahl erfolgt dabei so, dass das Vinylacetat-Ethylen-Copolymerisat im Allgemeinen eine Glasübergangstemperatur Tg von -20 bis +20°C aufweist. Die Glasübergangstemperatur Tg der Polymerisate kann in bekannter Weise mittels DSC (Dynamische Differenz-Thermoanalyse, DIN EN ISO 11357-1/2), bestimmt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung des Vinylacetat-Ethylen-Copolymerisats erfolgt in bekannter Weise, vorzugsweise mittels radikalisch initiierter Emulsionspolymerisation in Wasser. Die Polymerisationstemperatur beträgt 40°C bis 120°C, vorzugsweise 60°C bis 90°C. Bei der Copolymerisation von gasförmigen Comonomeren, wie Ethylen, wird vorzugsweise unter Druck, im Allgemeinen zwischen 5 bar und 120 bar, gearbeitet. Die Initiierung der Polymerisation kann mit den für die Emulsionspolymerisation gebräuchlichen Initiatoren, wie Hydroperoxid oder t-Butylhydroperoxid, oder Redox-Initiator-Kombinationen, mit Reduktionsmitteln, wie (Iso)Ascorbinsäure oder Na-Hydroxymethansulfinat (Brüggolit FF), erfolgen. Zur Steuerung des Molekulargewichts können während der Polymerisation regelnde Substanzen eingesetzt werden.

Die Polymerisation des Vinylacetat-Ethylen-Copolymerisats erfolgt in Gegenwart von Schutzkolloid oder in Gegenwart von Emulgator oder in Gegenwart einer Kombination von Schutzkolloid und Emulgator.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken, Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden Cellulosen oder deren Derivate, oder teilverseifte Polyvinylalkohole mit einem Hydrolysegrad von 80 bis 95 Mol-% und einer Höpplerviskosität in 4 %-iger wässriger Lösung von 1 bis 40 mPas, insbesondere 3 bis 30 mPas (Methode nach Höppler bei 20°C, DIN 53015). Besonders bevorzugt werden teilverseifte, niedermolekulare Polyvinylalkohole mit einem Hydrolysegrad von jeweils vorzugsweise 80 bis 95 Mol-%, besonders bevorzugt 85 bis 90 Mol-% am meisten bevorzugt 87 bis 89 Mol-%, und einer Höppler-Viskosität von jeweils vorzugsweise 1 bis 5 mPas und besonders bevorzugt 2 bis 4 mPas (Bestimmung nach DIN 53015, Methode nach Höppler, bei 20°C, in 4 %-iger wässriger Lösung).

Gegebenenfalls können auch teilverseifte, höhermolekulare Polyvinylalkohole mit einem Hydrolysegrad von vorzugsweise 80 bis 95 Mol-% und einer Höppler-Viskosität in 4 %-iger wässriger Lösung von vorzugsweise > 5 bis 40 mPas, besonders bevorzugt 8 bis 40 mPas (Methode nach Höppler bei 20°C, DIN 53015) im Gemisch mit den teilverseiften, niedermolekularen Polyvinylalkoholen eingesetzt werden. Gegebenenfalls können auch vollverseifte, höhermolekulare Polyvinylalkohole mit einem Hydrolysegrad von vorzugsweise 96 bis 100 Mol-%, insbesondere 98 bis 100 Mol-%, und einer Höppler-Viskosität in 4 %-iger wässriger Lösung von vorzugsweise 10 bis 56 mPas (Methode nach Höppler bei 20°C, DIN 53015) im Gemisch mit den teilverseiften, niedermolekularen Polyvinylalkoholen eingesetzt werden. Die teilverseiften, höhermolekularen Polyvinylalkohole und/oder die vollverseiften, höhermolekularen Polyvinylalkohole werden dabei jeweils in einer Menge von 0,1 bis 4 Gew.-%, jeweils bezogen auf das Gesamtgewicht der Comonomere, eingesetzt.

Bevorzugt sind auch modifizierte Polyvinylalkohole, im Folgenden auch X-PVOH genannt, mit einem Hydrolysegrad von 80 bis 99,9 Mol-%, bevorzugt von 85 bis 95 Mol.-%, und einer Höpplerviskosität, in 4 %-iger wässriger Lösung von 1 bis 30 mPas (Bestimmung nach DIN 53015 bei 20°C). Beispiele hierfür sind funktionelle Gruppen tragende Polyvinylalkohole, wie Acetoacetyl-Gruppen. Bevorzugt sind auch EthylenEinheiten enthaltende Polyvinylalkohole, sogenannte E-PVOH, die beispielsweise unter dem Handelsnamen EXCEVAL® bekannt sind. E-PVOH sind teil- oder vorzugsweise vollverseifte Copolymerisate von Vinylacetat und Ethylen. Bevorzugte E-PVOH haben einen Ethylen-Anteil von 0,1 bis 12 Mol-%, bevorzugt 1 bis 7 Mol-%, besonders bevorzugt 2 bis 6 Mol-% und insbesondere 2 bis 4 Mol-%. Der massemittlere Polymerisationsgrad beträgt 500 bis 5000, bevorzugt 2000 bis 4500 und besonders bevorzugt 3000 bis 4000. Der Hydrolysegrad ist im Allgemeinen größer als 92 Mol-%, bevorzugt 94,5 bis 99,9 Mol-% und besonders bevorzugt 98,1 bis 99,5 Mol-%.

Die Schutzkolloide sind im Handel erhältlich und mittels dem Fachmann bekannter Verfahren zugänglich. Es können auch Gemische der genannten Schutzkolloide eingesetzt werden. Die Polymerisation erfolgt vorzugsweise in Gegenwart von insgesamt 2 bis 10 Gew.-% Schutzkolloid, besonders bevorzugt insgesamt 5 bis 10 Gew.-%, jeweils bezogen auf das Gesamtgewicht der Comonomere.

Zur Stabilisierung der Dispersion werden bevorzugt nichtionische Emulgatoren eingesetzt. Es können auch ionische, vorzugsweise anionische, Emulgatoren verwendet werden. Es können auch Kombinationen von nichtionischen Emulgatoren mit anionischen Emulgatoren eingesetzt werden. Die Emulgatormenge beträgt im Allgemeinen 0,1 bis 5,0 Gew.-%, bezogen auf das Gesamtgewicht der Comonomere.

Geeignete nichtionische Emulgatoren sind beispielsweise Acyl-, Alkyl-, Oleyl- und Alkylarylethoxylate. Diese Produkte sind beispielsweise im Handel unter der Bezeichnung Genapol^{R} oder Lutensol^{R} erhältlich. Hierunter fallen ethoxylierte Mono-, Di- und Tri-Alkylphenole, vorzugsweise mit einem Ethoxylierungsgrad von 3 bis 50 Ethylenoxid-Einheiten und C₄- bis C₁₂-Alkylresten; sowie ethoxylierte Fettalkohole, vorzugsweise mit einem Ethoxylierungsgrad von 3 bis 80 Ethylenoxid-Einheiten und C₈- bis C₃₆-Alkylresten. Geeignete nichtionische Emulgatoren sind auch C₁₃-C₁₅-Oxoalkoholethoxylate mit einem Ethoxylierungsgrad von 3 bis 30 Ethylenoxid-Einheiten, C₁₆-C₁₈-Fettalkoholethoxylate mit einem Ethoxylierungsgrad von 11 bis 80 Ethylenoxid-Einheiten, C₁₀-Oxoalkoholethoxylate mit einem Ethoxylierungsgrad von 3 bis 11 Ethylenoxid-Einheiten, C₁₃-Oxoalkoholethoxylate mit einem Ethoxylierungsgrad von 3 bis 20 Ethylenoxid-Einheiten, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Besonders bevorzugt sind C₁₂-C₁₄-Fettalkoholethoxylate mit einem Ethoxylierungsgrad von 3 bis 30 Ethylenoxid-Einheiten.

Beispiele für geeignete anionische Emulgatoren sind Natrium-, Kalium- und Ammoniumsalze von geradkettigen aliphatischen Carbonsäuren mit 12 bis 20 C-Atomen; Natriumhydroxyoctadecansulfonat; Natrium-, Kalium- und Ammoniumsalze von Hydroxyfettsäuren mit 12 bis 20 C-Atomen und deren Sulfonierungs- und/oder Acetylierungsprodukte; Natrium-, Kalium- und Ammoniumsalze von Alkylsulfaten, auch als Triethanolaminsalze, und Natrium-, Kalium- und Ammoniumsalze von Alkylsulfonaten mit jeweils 10 bis 20 C-Atomen und von Alkylarylsulfonaten mit 12 bis 20 C-Atomen; Dimethyl-dialkylammoniumchlorid mit 8 bis 18 C-Atomen im Alkylrest und deren Sulfonierungsprodukte; Natrium-, Kalium- und Ammoniumsalze von Sulfobernsteinsäureestern mit aliphatischen gesättigten einwertigen Alkoholen mit 4 bis 16 C-Atomen und von Sulfobernsteinsäure-4-Ester mit Polyethylenglykolethern von einwertigen aliphatischen Alkoholen mit 10 bis 12 C-Atomen, insbesondere deren Di-Natriumsalze; Natrium-, Kalium- und Ammoniumsalze von Sulfobernsteinsäure-4-Ester mit Polyethylenglykolnonylphenylether, insbesondere dessen Di-Natriumsalz; Natrium-, Kalium- und Ammoniumsalze von Sulfobernsteinsäure-bis-cyclohexylester, insbesondere dessen Natriumsalz; Ligninsulfonsäure sowie deren Calcium-, Magnesium-, Natrium- und Ammoniumsalze; Harzsäuren sowie hydrierte und dehydrierte Harzsäuren sowie deren Alkalisalze.

Die Polymerisation wird im Allgemeinen jeweils bis zu einem Umsatz von > 95 Gew.-%, vorzugsweise bis zu einem Umsatz von 95 bis 99 Gew.-%, der unter Polymerisationsbedingungen flüssigen Monomere geführt. Die damit erhältlichen wässerigen Dispersionen des Vinylacetat-Ethylen-Copolymerisats haben jeweils einen Feststoffgehalt von 30 bis 75 Gew.-%, vorzugsweise von 50 bis 65 Gew.-%. Geeignete wässrige Dispersionen von Vinylacetat-Ethylen-Copolymerisaten sind auch im Handel erhältlich. Beispielsweise die Vinnapas^{R}-Dispersionen der Wacker Chemie AG.

Ein weiterer Gegenstand der Erfindung sind Teppichbeschichtungs-Zusammensetzungen enthaltend eine wässerige Dispersion eines Vinylacetat-Ethylen-Copolymerisats, und 0,1 bis 10 Gew.-% mindestens eines Polyethylenimins, bezogen auf das Trockengewicht des Vinylacetat-Ethylen-Copolymerisats (trocken/trocken), und 100 bis 1400 Gew.-% Füllstoff aus der Gruppe bestehend aus Kaolin, Talk, Flussspat, Flugasche, Aluminumtrihydrat und Kreide, bezogen auf das Trockengewicht des Vinylacetat-Ethylen-Copolymerisats (trocken/trocken), Wasser, gegebenenfalls ein oder mehrere Additive und gegebenenfalls ein oder mehrere Zusatzstoffe.

Der Feststoffgehalt der Teppichbeschichtungs-Zusammensetzungen beträgt vorzugsweise 72 bis 83 Gew.-%, besonders bevorzugt 75 bis 80 Gew.-%, jeweils bezogen auf das Gesamtgewicht der Teppichbeschichtungs-Zusammensetzungen. Die Teppichbeschichtungs-Zusammensetzungen haben nach Zugabe von Füllstoffen und in Abwesenheit von Additiven oder Zusatzstoffen eine Brookfield-Viskosität von vorzugsweise < 7000 mPas, besonders bevorzugt < 3000 mPas (Messung mit Brookfield RV Messgerät mit Spindel 4, 20 Upm, bei 25°C).

Die Füllstoffe sind ausgewählt aus der Gruppe bestehend aus Kaolin, Talk, Flussspat, Flugasche, Aluminumtrihydrat und Kreide.

Beispiele für Additive sind Verdickungsmittel, wie Polyacrylate oder Celluloseether, oder Schaumhilfsmittel. Im Falle des Schaumauftrags werden vorzugsweise Schaumhilfsmittel zugegeben. Verdickungsmittel können zur Einstellung der Zielviskosität der Teppichbeschichtungs-Zusammensetzungen zugegeben werden. Im Allgemeinen reicht dazu eine Menge an Verdickungsmittel von 0,1 bis 6 Gew.-% und vorzugsweise 1 bis 3 Gew.-%, jeweils bezogen auf das Gewicht des Vinylacetat-Ethylen-Copolymerisats (trocken/trocken). Vorzugsweise wird auf diese Weise eine Brookfield-Viskosität von 2000 bis 10000 mPas eingestellt (Messung mit Brookfield RV Messgerät mit Spindel 4, 20 Upm, bei 25°C). Bei der erfindungsgemäßen Vorgehensweise kann aber auch auf Verdickungsmittel verzichtet werden.

Übliche Zusatzstoffe sind beispielsweise Dispergiermittel, Netzmittel, Pigmente, Hydrophobierungsmittel oder Biozide, wie Formaldehyd-Depotstoffe, Isothiazolinone, Phenole oder quartäre Ammoniumverbindungen. Zur Optimierung der Formulierungsviskosität können auch organische Säuren wie Zitronensäure eingesetzt werden. Die Teppichbeschichtungs-Zusammensetzungen enthalten vorzugsweise keine Weichmacher oder Filmbildehilfsmittel.

Die Teppichbeschichtungs-Zusammensetzungen enthalten 100 bis 1400 Gew.-Teile Füllstoff aus der Gruppe bestehend aus Kaolin, Talk, Flussspat, Flugasche, Aluminumtrihydrat und Kreide, auf 100 Teile des Vinylacetat-Ethylen-Copolymerisats (trocken/trocken). Dies wird auch als Füllgrad von 100 % bis 1400 % bezeichnet. Die Menge an Füllstoffen in der Formulierung kann in Abhängigkeit von den gewünschten Beschichtungseigenschaften variieren. Je höher der Füllstoffanteil (Füllgrad) umso geringer sind die mechanischen Eigenschaften.

Für den Vorstrich werden vorzugsweise Teppichbeschichtungs-Zusammensetzungen mit Füllgraden von 300 % bis 1400 % verwendet. Besonders bevorzugt sind Füllgrade von 600 % bis 1000 % für Vorstriche für Wohnanwendungen und 300 % bis 600 % für kommerzielle Anwendungen, wie Büro, Hotel oder Schiffe.

Für den Zweitstrich werden vorzugsweise Teppichbeschichtungs-Zusammensetzungen mit Füllgraden von 275 % bis 600 % für Wohnanwendungen und 200 % bis 275 % für kommerzielle Anwendungen, wie Büro, Hotel oder Schiffe, verwendet.

Zur Herstellung der Teppichbeschichtungs-Zusammensetzungen kann so vorgegangen werden, dass die wässerige Dispersion des Vinylacetat-Ethylen-Copolymerisats und der Polyethylenimin-Anteil gemischt werden und anschließend die Füllstoffe eingerührt werden. Es kann auch so vorgegangen werden, dass der Polyethylenimin-Anteil bereits vor oder während oder nach der Polymerisation von Vinylacetat und Ethylen dem Polymerisationsansatz zugegeben wird.

Etwaige Additive und Zusatzstoffe können der Teppichbeschichtungs-Zusammensetzung generell zu einem beliebigen Zeitpunkt, vorzugsweise vor Zugabe von Füllstoffen zugegeben werden. Für das Herstellen der Teppichbeschichtungs-Zusammensetzung ist das hierfür etablierte, dem Fachmann bekannte Equipment geeignet.

Ein weiterer Gegenstand der Erfindung sind Teppiche, welche mit einer oder mehreren erfindungsgemäßen Teppichbeschichtungs-Zusammensetzungen im Vorstrich und/oder Zweitstrich beschichtet sind.

Die Teppichbeschichtungs-Zusammensetzungen können vorteilhafterweise nach bekannten Verfahren in bestehenden Anlagen zur Teppichherstellung eingesetzt werden.

Die Teppichbeschichtungs-Zusammensetzungen sind geeignet zur Verfestigung von Teppichen, beispielsweise Bahnwaren oder Teppichfliesen. Die Teppichbeschichtungs-Zusammensetzungen können zur Herstellung von Tufting-Teppichen, Webteppichen oder Nadelfilzteppichen verwendet werden.

Die nachfolgenden Beispiele dienen der weiteren Erläuterung der Erfindung:

### Methoden:

### Bestimmung der Glasübergangstemperatur Tg:

Die Glasübergangstemperatur Tg der Polymerisate wurde mittels DSC (Dynamische Differenz-Thermoanalyse, DIN EN ISO 11357-1/2) mit dem dynamischen Differenzkalorimeter DSC 1 der Firma Mettler-Toledo im offenen Tiegel bei einer Heizrate von 10 K/min bestimmt. Als Glasübergangstemperatur ausgewertet wurde die Temperatur am Mittelpunkt der zweiten Aufheizkurve (Mittelpunkt = halbe Stufenhöhe).

### Bestimmung der Brookfield-Viskosität:

Die Bestimmung der Brookfield-Viskositäten der wässrigen Polymerdispersionen erfolgte gemäß EN ISO 2555 mit einem Brookfield RV Viskosimeter, nach Temperierung auf die angegebene Temperatur, unter Verwendung der jeweils angegebenen Spindel, bei der angegebenen Anzahl von Umdrehungen pro Minute. Die Viskosität wird in mPas angegeben.

### Bestimmung der Teilchengröße Dw:

Mittlere Partikeldurchmesser Dw bestimmt mit dem Messgerät Beckmann Coulter® LS nach ISO 13320.

Herstellung der wässerigen Vinylacetat-Ethylen-Copolymer-Dispersionen

### Dispersion A (A):

Folgende Komponenten wurden in einem mit Stickstoff gespülten 572-Liter-Druckreaktor vorgelegt:
125,2 kg deionisiertes Wasser,
56,0 kg einer 20 Gew.-%-igen wässerigen Lösung eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung),
26,1 kg einer 25 Gew.-%-igen wässerigen Lösung eines Fettalkoholethoxylates mit einem mittleren Ethoxylierungsgrad von 30 Mol EO-Einheiten,
241,7 kg Vinylacetat,
0,48 kg einer 1,0 Gew.-%-igen wässerigen Ammoniumeisensulfat-Lösung.

Die Vorlage wurde mit 250 mL Ameisensäure (98 Gew.-%-ig) auf einen pH Wert von 4,0 eingestellt.

Unter Rühren (240 Upm) wurde die Vorlage auf 35°C aufgeheizt und Ethylen bis zu einem Druck von 30 bar aufgedrückt. Bei Erreichen der Temperatur von 35°C und einem Druck von 30 bar wurden die Initiatordosierungen, bestehend aus einer wässerigen 3,5 Gew.-%-igen Wasserstoffperoxid-Lösung und einer wässerigen 10 Gew.-%-igen Natrium-Isoascorbat-Lösung, mit jeweils 700 g/h gestartet. Nach Reaktionsstart (10 Minuten nach Start Initiatordosierung), deutlich erkennbar am Anstieg der Reaktorinnentemperatur, wurde die Reaktorinnentemperatur mit Hilfe der freiwerdenden Reaktionswärme auf 85°C angehoben. Parallel wurde 10 Minuten nach Reaktionsbeginn eine Vinylacetatdosierung mit 35,1 kg/h gestartet (Dosierzeit 120 min, 70,2 kg). Bei Erreichen einer Reaktorinnentemperatur von 80°C wurde Ethylen bis zu einem Solldruck von 58 bar nachgeführt, bis eine Gesamtethylenmenge von 52,8 kg dosiert war.

Nach Ende der Vinylacetatdosierungen wurden die Initiatordosierungen noch 30 Minuten mit jeweils 2000 g/h nachdosiert, wobei der Druck auf 20 bar abfiel. Anschließend wurde der Ansatz auf 70°C abgekühlt und in einen Drucklosreaktor (Niederdruckreaktor) überführt und dort bei einem Druck von 700 mbar abs. durch Zugabe von 2,6 kg tert.-Butylhydroperoxid-Lösung (10 Gew.-% in Wasser) und 2,6 kg Natrium-Isoascorbat-Lösung (10 Gew.-% in Wasser) nachpolymerisiert.

| | |
|---|---|
| Festgehalt: | 63 Gew.-% |
| Brookfield-Viskosität: | 1300 mPas (Spindel 2, 20 Upm, 23°C) |
| Teilchengröße: | Dw 1,0 µm, (Coulter LS) |
| Glasübergangstemperatur: | 7,0°C (DSC) |
| Schutzkolloid: | 3,1 Gew.-%, bezogen auf Comonomere |
| Emulgator: | 1,8 Gew.-% bezogen auf Comonomere |

### Dispersion B (B):

Folgende Komponenten wurden in einem mit Stickstoff gespülten 590-Liter-Druckreaktor vorgelegt:
134,9 kg deionisiertes Wasser,
75,9 kg einer 20 Gew.-%-igen wässerigen Lösung eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung),
12,5 kg einer 10 Gew.-%-igen wässerigen Lösung eines Polyvinylalkohols mit einem mittleren Hydrolysegrad von 88 Mol-% und einer Höppler-Viskosität von 23 - 26 mPas (Bestimmung nach DIN 53015, bei 20°C, in 4 %-iger wässriger Lösung),
224 kg Vinylacetat,
0,48 kg einer 1,0 Gew.-%-igen wässerigen Ammoniumeisensulfat-Lösung.

Die Vorlage wurde mit 250 mL Ameisensäure (98 Gew.-%-ig) auf einen pH Wert von 4,0 eingestellt.

Unter Rühren (240 Upm) wurde die Vorlage auf 55°C aufgeheizt und Ethylen bis zu einem Druck von 20 bar aufgedrückt. Bei Erreichen der Temperatur von 55°C und einem Druck von 20 bar wurden die Initiatordosierungen, bestehend aus einer wässerigen 3 Gew.-%-igen tert-Butylhydroperoxid-Lösung und einer wässerigen 5 Gew.-%-igen Ascorbinsäure-Lösung, mit jeweils 700 g/h gestartet. Nach Reaktionsstart, deutlich erkennbar am Anstieg der Reaktorinnentemperatur, wurden die Reaktorinnentemperatur mit Hilfe der freiwerdenden Reaktionswärme auf 90°C und der Druck auf 48 bar angehoben. Die Initiatordosierungen wurden zur Kontrolle der Reaktionswärme jeweils auf 350 g/h reduziert.

45 Minuten nach Reaktionsbeginn wurden eine Vinylacetat- und eine Polyvinylalkohol-Dosierung gestartet. Vinylacetat wurde innerhalb von 90 Minuten mit einer Rate von 40 kg/h (= 60 kg Vinylacetat) in den Reaktor dosiert, der Polyvinylalkohol, bestehend aus einer 10 Gew.-%-igen wässerigen Lösung eines Polyvinylalkohols mit einem mittleren Hydrolysegrad von 88 Mol-% und einer Höppler Viskosität von 4 mPas (Bestimmung nach DIN 53015, bei 20°C, in 4 %-iger wässriger Lösung), wurde innerhalb von 120 Minuten mit einer Rate von 14 kg/h (= 28,0 kg wässerige Polyvinylalkohol-Lösung). Ethylen wurde während der Polymerisation bei einem Solldruck von 44 bar nachdosiert, bis eine Gesamtethylenmenge von 34 kg dosiert war.

Nach Ende der Dosierungen wurden die Initiatordosierungen noch 30 Minuten mit jeweils 1300 g/h nachdosiert, wobei der Druck auf 20 bar abfiel. Anschließend wurde der Ansatz auf 65°C abgekühlt und in einen Drucklosreaktor (Niederdruckreaktor) überführt und dort bei einem Druck von 700 mbar abs. durch Zugabe von 1 kg tert.-Butylhydroperoxid-Lösung (10 Gew.-% in Wasser) und 2 kg Ascorbinsäure-Lösung (5 Gew.-% in Wasser) nachpolymerisiert.

| | |
|---|---|
| Festgehalt: | 58 Gew.-% |
| Brookfield-Viskosität: | 1800 mPas (Spindel 2, 20 Upm, 23°C) |
| Teilchengröße: | Dw 1,0 µm, (Coulter LS) |
| Glasübergangstemperatur: | 15,0°C (DSC) |
| Schutzkolloid: | 6,2 Gew.-%, bezogen auf Comonomere |

### Dispersion C (C):

Es wurde analog zur Herstellung der Dispersion B vorgegangen, mit dem Unterschied, dass in der Vorlage nur ein Polyvinylalkohol vorgelegt wurde, nämlich 94,0 kg einer 20 Gew.-%-igen wässerigen Lösung eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung) und dass kein Polyvinylalkohol dosiert wurde, und die Vinylacetat- und Ethylen-Menge so gewählt wurde, dass ein Copolymer mit 77 Gew.-% Vinylacetat und 23 Gew.-% Ethylen erhalten wurde.

| | |
|---|---|
| Festgehalt: | 52,5 Gew.-% |
| Brookfield-Viskosität: | 210 mPas (Spindel 1, 20 Upm, 23°C) |
| Teilchengröße: | Dw 1,0 µm, (Coulter LS) |
| Glasübergangstemperatur: | -7,0°C (DSC) |
| Schutzkolloid: | 6,4 Gew.-%, bezogen auf Comonomere |

### Herstellung der Teppichbeschichtungs-Zusammensetzungen:

### Formulierung 1 (F1):

Mit den Dispersionen A bis C wurden Teppichbeschichtungs-Zusammensetzungen basierend auf folgender allgemeiner Rezeptur hergestellt:

| | | |
|---|---|---|
| 100 | Gew.-Teile | der jeweiligen Dispersion (Polymerisat trocken), |
| X | Gew.-Teile | Polyethylenimin, Art und Menge wie im Beispiel angegeben, |
| 450 | Gew.-Teile | Kreide (Carbocia 80, Carbocia) (Füllstoff), |
| 0,5 | Gew.-Teile | Schaumhilfsmittel (Natriumlaurylsulfat). |

Die Angaben in Gew.-Teile beziehen sich auf das Trockengewicht der jeweiligen Teppichbeschichtungs-Zusammensetzung.

Zusätzliches Wasser wurde in einer Menge zugesetzt, so dass Teppichbeschichtungs-Zusammensetzungen mit einem Festgehalt von 81,5 Gew.-% resultierten.

Zur Herstellung der Teppichbeschichtungs-Zusammensetzungen wurden das Wasser und die jeweilige Dispersion und das jeweilige Polyethylenimin vorgelegt und unter Rühren der Füllstoff und danach das Schaumhilfsmittel zugegeben.

Die Teppichbeschichtungszusammensetzungen hatten einen Festgehalt von 81,5 Gew.-% und einen Füllgrad von 450 Gew.-%.

Anschließend wurde durch Zugabe eines Verdickungsmittels (Acrylatverdicker Matco TR 10, Matco) eine Endviskosität von 6500 mPas eingestellt (Messung mit Brookfield RV Messgerät mit Spindel 4, 20 Upm, bei 25°C).

### Formulierung 2 (F2):

Wie F1, jedoch mit 800 Gew.-Teilen Kreide (Carbocia 80, Carbocia). Zusätzliches Wasser wurde in einer Menge zugesetzt, so dass Teppichbeschichtungs-Zusammensetzungen mit einem Festgehalt von 81,5 Gew.-% resultierten.

Unter Zugabe eines Verdickungsmittels (Acrylatverdicker Matco TR 10, Matco) wurde eine Endviskosität von 6500 mPas eingestellt (Messung mit Brookfield RV Messgerät mit Spindel 4, 20 Upm, bei 25°C).

### Formulierung 3 (F3):

Wie F1, jedoch mit 250 Gew.-Teilen Kreide (Carbocia 80, Carbocia). Zusätzliches Wasser wurde in einer Menge zugesetzt, so dass Teppichbeschichtungs-Zusammensetzungen mit einem Festgehalt von 81,5 Gew.-% resultierten.

Unter Zugabe eines Verdickungsmittels (Acrylatverdicker Matco TR 10, Matco) wurde eine Endviskosität von 6500 mPas eingestellt (Messung mit Brookfield RV Messgerät mit Spindel 4, 20 Upm, bei 25°C).

### Herstellung der Teppiche PA und PP:

Die jeweilige, oben beschriebene Teppichbeschichtungs-Zusammensetzung (Formulierungen 1 bis 3) wurde 3 Minuten mit einer Küchenmaschine aufgeschäumt, so dass Schaumlitergewichte von 950 bis 1015 g/L erreicht wurden.

### Teppich PA:

Als Vorstrich (Precoat) wurden 148 g der jeweiligen, aufgeschäumten Teppichbeschichtungs-Zusammensetzung gleichmäßig auf einen 38 cm X 33 cm großen Tuftrohteppich aus Polyamid verteilt (Schlingenpol Tuftteppich: 100 % Polyamid, im Folgenden bezeichnet als PA; 550 g/m² Polgewicht; Qualität Helsinki 151; Hersteller: Firma Edel).

Anschließend wurden als Zweitstrich (Secondary Coating) 60 g einer, aufgeschäumten Teppichbeschichtungs-Zusammensetzung F1 bis F3 aufgebracht und gleichmäßig verteilt. Nachfolgend wurde ein textiler Rücken (Polypropylengewebe, Action Back) aufgelegt und zweimal mit einer 1,6 kg schweren Rolle ohne Druck eingearbeitet. Es wurde für 20 Minuten bei 130°C in einem Ofen getrocknet.

### Teppich PP:

Als Vorstrich (Precoat) wurden 148 g der jeweiligen, aufgeschäumten Teppichbeschichtungs-Zusammensetzung gleichmäßig auf einen 38 cm X 33 cm großen Tuftrohteppich aus Polypropylen verteilt (Schlingenpol Tuftteppich: 100 % Polypropylen, im Folgenden bezeichnet als PP; 550 g/m² Polgewicht; Qualität Puma 182; Hersteller: Firma Edel).

Anschließend wurden als Zweitstrich (Secondary Coating) 60 g einer, aufgeschäumten Teppichbeschichtungs-Zusammensetzung F1 bis F3 aufgebracht und gleichmäßig verteilt. Nachfolgend wurde ein textiler Rücken (Polypropylengewebe, Action Back) aufgelegt und zweimal mit einer 1,6 kg schweren Rolle ohne Druck eingearbeitet. Es wurde für 20 Minuten bei 130°C in einem Ofen getrocknet.

### Methoden zur Ausprüfung der Teppiche:

### Messung der Noppenauszugskraft:

Die Ausprüfung der Noppenauszugskraft erfolgte gemäß ISO 4919 mit Hilfe einer Zwick-Prüfmaschine bei 23°C und 50 % relativer Luftfeuchtigkeit. Der jeweilige Teppich wurde in den Aufsatz am Boden des Messgerätes eingespannt und eine Nadel in eine Teppichschlaufe eingefädelt. An zehn verschiedenen Teppichschlaufen wurde die Kraft bestimmt, welche erforderlich war, um eine Schlaufe aus dem Teppich herauszuziehen. Der Mittelwert der Messergebnisse ergab die Trocken-Noppenauszugskraft.

Zur Bestimmung der Nass-Noppenauszugskraft wurden Proben, wie sie für die Bestimmung der Trocken-Noppenauszugskraft hergestellt wurden, für 10 min in Wasser eingelegt, vor der weiteren Prüfung oberflächlich trockengetupft und auf diese Weise von überstehendem Wasser befreit.

Die Trocken-Noppenauszugskraft und die Nass-Noppenauszugskraft sind ein Maß für die Güte der Noppenbindung durch den Vorstrich und für die Abnutzungseigenschaften der Teppichoberfläche. Daher sollten diese möglichst hoch ausfallen.

### Messung der Trennfestigkeit:

Die Trennfestigkeit wurde analog zu DIN EN ISO 11857 mit Hilfe einer Zwick-Prüfmaschine bei 23°C und 50 % relativer Luftfeuchtigkeit bestimmt. Es wurden drei Proben hergestellt, indem aus dem jeweiligen Teppich in Maschinenlaufrichtung Streifen mit einer Breite von 5 cm und einer Länge von 20 cm zugeschnitten und an der Schmalseite von Hand auf einer Länge von 5 cm getrennt wurden. Jede angetrennte Probe wurde in eine Zwick-Prüfmaschine eingespannt und mit einer Geschwindigkeit von 300 mm/min der Zweitrücken vom Teppich abgetrennt. Der Gesamtmittelwert aus fünf Proben wurde gemäß DIN EN ISO 11857 aus den Mittelwerten der Spitzenwerte je Probe in dem zulässigen Messbereich bestimmt. Dabei wurden die ersten 25 % der jeweiligen Messkurve markiert und für die Auswertung nicht berücksichtigt. Die nächsten 50 % des Diagrammschriebs wurden in 5 gleiche Abschnitte geteilt und aus diesen der jeweilige Spitzenwert ermittelt. Die Spitzenwerte wurden zum Mittelwert zusammengefasst und die Mittelwerte wiederum zu Gesamtmittelwert. Die Trennfestigkeit wurde in Newton [N] angegeben.

Zur Bestimmung der Nass-Trennfestigkeit wurden Proben, wie sie für die Bestimmung der Trocken-Trennfestigkeit hergestellt wurden, zusätzlich für 10 min in Wasser eingelegt und vor der weiteren Prüfung oberflächlich trockengetupft und auf diese Weise von überstehendem Wasser befreit.

### Beispiel 1:

In Beispiel 1 wurden zur Formulierung F1 mit Dispersion A als Bindemittel zusätzlich noch 0,5 % (1.A), 1 % (1.B), 3 % (1.C) und 5 % (1.D), jeweils bezogen auf das Trockengewicht des Vinylacetat-Ethylen-Copolymers, eines Polyethylenimins (LUPASOL FG, BASF, Mittleres Molekulargewicht 800 g/mol) zugegeben. Ausgeprüft wurde Teppich PA. In Tabelle 1 sind die Prüfergebnisse zusammengefasst.

### Beispiel 2:

Wie Beispiel 1, jedoch mit dem Polyethylenimin LUPASOL G20 (LUPASOL G20, BASF, Mittleres Molekulargewicht 1 300 g/mol). In Tabelle 1 sind die Prüfergebnisse zusammengefasst.

### Beispiel 3:

Wie Beispiel 1, jedoch mit dem Polyethylenimin LUPASOL HF (LUPASOL HF, BASF, Mittleres Molekulargewicht 25 000 g/mol). In Tabelle 1 sind die Prüfergebnisse zusammengefasst.

### Beispiel 4:

Wie Beispiel 1, jedoch mit dem Polyethylenimin LUPASOL P (LUPASOL P, BASF, Mittleres Molekulargewicht 750 000 g/mol) bezogen auf das Trockengewicht des eingesetzten Vinylacteat-Ethylen Copolymers. In Tabelle 1 sind die Prüfergebnisse zusammengefasst.

### Vergleichsbeispiel:

Wie Beispiel 1, jedoch wurde kein Polyethylenimin zugegeben.
In Tabelle 1 sind die Prüfergebnisse zusammengefasst.

**Tabelle 1:**

| Beispiel 1 bis 4 auf Teppich PA mit Formulierung F1 und Dispersion A. | | | | | | |
|---|---|---|---|---|---|---|
| Bsp. | w(Mod.) | Trennfestigkeit | | | Noppenauszugskraft | |
| | | trocken | nass | Ref/Mod* | trocken | nass |
| | [Gew.-%] | [N] | [N] | [%] | [N] | [N] |
| V.bsp. | 0 | 31,3 | 8,8 | - | 37,5 | 22,1 |
| 1.A | 0,5% | 35 | 17,1 | 193 | 34,7 | 24,4 |
| 1.B | 1% | 36,7 | 17,4 | 196 | 39,9 | 24,9 |
| 1.C | 3% | 28 | 15,5 | 175 | 42,9 | 25,5 |
| 1.D | 5% | 30,5 | 14,1 | 159 | 45,9 | 28,1 |
| | | | | | | |
| 2.A | 0,5% | 38,7 | 14,3 | 161 | 46 | 24,2 |
| 2.B | 1% | 41,8 | 17,8 | 201 | 28,3 | 22,0 |
| 2.C | 3% | 37,9 | 20,8 | 234 | 30,5 | 21,5 |
| 2.D | 5% | 27,7 | 12,8 | 144 | 47 | 28,0 |
| | | | | | | |
| 3.A | 0,5% | 49,8 | 24,2 | 273 | 33,3 | 22,9 |
| 3.B | 1% | 41 | 22,2 | 250 | 37,6 | 23,2 |
| 3.C | 3% | 37,4 | 15,9 | 179 | 42,9 | 27,4 |
| 3.D | 5% | 43,5 | 16,6 | 187 | 43,9 | 24,3 |
| | | | | | | |
| 4.A | 0,5% | 44,6 | 23,9 | 269 | 33,4 | 21,2 |
| 4.B | 1% | 36,8 | 20,3 | 229 | 44,5 | 29,3 |
| 4.C | 3% | 45,2 | 24,6 | 277 | 39,4 | 24,2 |
| 4.D | 5% | 47,1 | 19,4 | 219 | 42,5 | 27,8 |

| | | | | | | |
|---|---|---|---|---|---|---|
| (* = Verhältnis der Trennfestigkeit nass aus modifizierter Formulierung und unmodifizierter Referenz in Prozent) | | | | | | |

Aus den Prüfergebnissen wird deutlich, dass die Nasseigenschaften in Noppenauszug und Trennfestigkeit für die mischstabilisierte Dispersion A insbesondere mit höhermolekularem Polyethylenimin signifikant verbessert werden.

### Beispiele 5 bis 7:

In den Beispielen 5 bis 7 wurde
in den Beispielen 5.A, 5.B, 5.C und 5.D zur Formulierung F1 mit der Dispersion A,
in den Beispielen 6.A, 6.B, 6.C und 6.D zur Formulierung F1 mit der Dispersion B,
in den Beispielen 7.A, 7.B, 7.C und 7.D zur Formulierung F1 mit der Dispersion C,
jeweils mit Zugabe von Polyethylenimin oder ohne Zugabe von Polyethylenimin, jeweils auf Polyamid-Teppich PA oder Polypropylen-Teppich PP getestet.

Es wurden dabei jeweils 1 Gew.-% des Polyimins Lupasol P (Lupasol P, BASF, Mittleres Molekulargewicht 750 000 g/mol), jeweils bezogen auf das Trockengewicht des Vinylacetat-Ethylen-Copolymers, zugegeben.

Die mechanischen Prüfergebnisse können Tabelle 2 entnommen werden.

Die in Tabelle 2 zusammengefassten Ergebnisse belegen den Effekt der Verbesserung der mechanischen Eigenschaften insbesondere nach Nasslagerung. Besonders ausgeprägt ist die Erhöhung der Trennfestigkeit und der Noppenauszugskraft bei Dispersion C. Auch Dispersion B zeigt, als rein Polyvinylalkohol stabilisierte Vinylacetat-Ethylen Copolymerdispersion, eine erhebliche Verbesserung der Trennfestigkeiten (nass). Für die teilstabilisierte Dispersion A lässt sich die Verbesserung vorrangig in den Noppenauszugsmessungen erzielen.

**Tabelle 2:**

| 1 Gew.-% Polyethylenimin mit MG 750000 g/mol (Lupasol P) in Formulierung F1 mit Dispersion A (Bsp. 5.A-5.D), Dispersion B (Bsp. 6.A-6.D) und Dispersion C (Bsp. 7.A-7.D) auf den Teppichen PA und PP. | | | | | | | |
|---|---|---|---|---|---|---|---|
| Bsp. | w(Mod.) | Teppich | Trennfestigkeit | | Noppenauszugskraft | | Verdicker |
| | | | nass | Ref/Mod* | nass | Ref/Mod* | |
| | [Gew.-%] | | [N] | [%] | [N] | [%] | [g/100 g] |
| 5.A | - | PA | 16.9 | | 19.2 | | 6.9 |
| 5.B | 1% | PA | 15.5 | 92 | 28.8 | 150 | 7.4 |
| 5.C | - | PP | 20 | | 21 | | 6.9 |
| 5.D | 1% | PP | 15.7 | 79 | 23.3 | 111 | 7.4 |
| | | | | | | | |
| 6.A | - | PA | 12.7 | | 21.8 | | 7.9 |
| 6.B | 1% | PA | 21 | 165 | 28.4 | 130 | 6.1 |
| 6.C | - | PP | 15.1 | | 22.9 | | 7.9 |
| 6.D | 1% | PP | 21 | 139 | 21.7 | 95 | 6.1 |
| | | | | | | | |
| 7.A | - | PA | 10 | | 21.7 | | 11 |
| 7.B | 1% | PA | 20 | 200 | 24.8 | 114 | 7.6 |
| 7.C | - | PP | 8 | | 22.9 | | 11 |
| 7.D | 1% | PP | 20.3 | 254 | 29.9 | 131 | 7.6 |

| | | | | | | | |
|---|---|---|---|---|---|---|---|
| * Verhältnis der Trennfestigkeit nass oder Noppenauszugskraft nass aus modifizierter Formulierung und unmodifizierter Referenz für den jeweiligen Teppich PA oder PP in Prozent. | | | | | | | |

### Beispiele 8 und 9:

In Beispiel 8 und Beispiel 9 wurde jeweils für den Vorstrich Formulierung 2 mit Dispersion B und 1 Gew.-%, jeweils bezogen auf das Trockengewicht des Vinylacetat-Ethylen Copolymers, Polyethylenimin (Lupasol P, BASF, Mittleres Molekulargewicht 750000 g/mol) eingesetzt.

Für den Zweitstrich wurde Formulierung 3 mit Dispersion C und 1 Gew.-%, jeweils bezogen auf des Trockengewicht des Vinylacetat-Ethylen-Copolymers, Polyethylenimin (Lupasol P, BASF, Mittleres Molekulargewicht 750000 g/mol) eingesetzt.

Der Auftrag auf die Teppiche PA und PP erfolgte dabei in der Ausführung nass/trocken, also nach Vortrocknung des Vorstrichs mit anschließendem Auftrag des Zweitstrichs oder nass/nass, also ohne Vortrocknung des Vorstrichs mit anschließendem Auftrag des Zweitstrichs.

Die Ergebnisse der mechanischen Prüfung sind in Tabelle 3 zusammengefasst.

**Tabelle 3:**

| 1 Gew.-% Polyethylenimin in Formulierung F2 mit Dispersion B im Vorstrich (F2) und 1 Gew.-% Polyethylenimin in Formulierung F3 mit Dispersion C im Zweitstrich (F3) auf den Teppichen PA und PP. Die Auftragsart wird hinsichtlich nass/trocken und nass/nass unterschieden. | | | | | | | |
|---|---|---|---|---|---|---|---|
| Bsp. | Auftrag | Teppich | w(Mod.) | Trennfestigkeit | | Noppenauszugskraft | |
| | | | | nass | Ref/Mod* | nass | Ref/Mod* |
| | | | [Gew.-%] | [N] | [%] | [N] | [%] |
| 8.A | nass/trocken | PA | - | 2.2 | | 6.6 | |
| 8.B | nass/trocken | PA | 1% | 7.6 | 345 | 11.7 | 177 |
| 8.C | nass/trocken | PP | - | 2.2 | | 12.2 | |
| 8.D | nass/trocken | PP | 1% | 11 | 500 | 23.3 | 191 |
| | | | | | | | |
| 9.A | nass/nass | PA | 1% | 4 | | 11.4 | |
| 9.B | nass/nass | PA | - | 13 | 325 | 8.41 | 135 |
| 9.C | nass/nass | PP | 1% | 3.9 | | 20.0 | |
| 9.D | nass/nass | PP | - | 14.7 | 377 | 12.6 | 166 |

| | | | | | | | |
|---|---|---|---|---|---|---|---|
| * Verhältnis der Trennfestigkeit nass oder Noppenauszugskraft nass aus modifizierter Formulierung und unmodifizierter Referenz für den jeweiligen Teppich PA oder PP in Prozent. | | | | | | | |

Aus den Ergebnissen der Beispiele 8 und 9 wird ersichtlich, dass für beide Teppichvarianten PP und PA sowohl für die Auftragungsart nass/trocken als auch nass/nass erhebliche Verbesserungen der Trennfestigkeiten nass unter Zugabe von Polyethylenimin erzielt werden. Dabei konnte besonders bei der kritischen Auftragungsart mit Vortrocknung des Vorstriches (nass/trocken) eine signifikante Erhöhung der Trennfestigkeiten und Noppenauszüge nach Nasslagerung von bis zu 500 % erzielt werden.

Grundsätzlich lassen sich sowohl für die Teppiche PA und PP Verbesserungen der Nasseigenschaften durch Zugabe von Polyethylenimin erzielen.

## Patentansprüche

1. Verwendung einer wässerigen Dispersion eines Vinylacetat-Ethylen-Copolymerisats und mindestens eines Polyethylenimins als Bindemittel in einer Teppichbeschichtungs-Zusammensetzung zur Herstellung von Teppichen.

2. Verwendung nach Anspruch 1, **dadurch gekennzeichnet, dass** das Vinylacetat-Ethylen-Copolymerisat mittels radikalisch initiierter Emulsionspolymerisation in wässerigem Medium von 60 bis 98 Gew.-% Vinylacetat und 2 bis 30 Gew.-% Ethylen, jeweils bezogen auf das Gesamtgewicht der Comonomere, erhalten wird, wobei sich die Angaben in Gew.-% jeweils auf 100 Gew.-% aufaddieren.

3. Verwendung nach Anspruch 1 oder 2, **dadurch gekennzeichnet, dass** die Emulsionspolymerisation des Vinylacetat-Ethylen-Copolymerisats in Gegenwart von Schutzkolloid oder in Gegenwart von Emulgator oder in Gegenwart einer Kombination von Schutzkolloid und Emulgator erfolgt.

4. Verwendung nach Anspruch 1 bis 3, **dadurch gekennzeichnet, dass** das Polyethylenimin ein gewichtsmittleres Molekulargewicht von 500 g/mol bis 1000000 g/mol aufweist.

5. Verwendung nach Anspruch 1 bis 3, **dadurch gekennzeichnet, dass** das Polyethylenimin ein gewichtsmittleres Molekulargewicht von 10000 g/mol bis 1000000 g/mol aufweist.

6. Verwendung nach Anspruch 1 bis 5, **dadurch gekennzeichnet, dass** das Polyethylenimin in der Teppichbeschichtungs-Zusammensetzung in einer Menge von 0,1 bis 10 Gew.-%, bezogen auf das Trockengewicht des Vinylacetat-Ethylen-Copolymerisats enthalten ist.

7. Teppichbeschichtungs-Zusammensetzung enthaltend eine wässerige Dispersion eines Vinylacetat-Ethylen-Copolymerisats, und 0,1 bis 10 Gew.-% mindestens eines Polyethylenimins, bezogen auf das Trockengewicht des Vinylacetat-Ethylen-Copolymerisats (trocken/trocken), und 100 bis 1400 Gew.-% Füllstoff **aus der Gruppe bestehend aus Kaolin, Talk, Flussspat, Flugasche, Aluminiumtrihydrat und Kreide,** bezogen auf das Trockengewicht des Vinylacetat-Ethylen-Copolymerisats (trocken/trocken), Wasser, gegebenenfalls ein oder mehrere Additive und gegebenenfalls ein oder mehrere Zusatzstoffe.

8. Teppichbeschichtungs-Zusammensetzung nach Anspruch 7, welche dadurch erhalten wird, dass die wässerige Dispersion des Vinylacetat-Ethylen-Copolymerisats und der Polyethylenimin-Anteil gemischt werden und anschließend die Füllstoffe eingerührt werden, oder dadurch erhalten wird, dass das Polyethylenimin vor oder während oder nach der Polymerisation von Vinylacetat und Ethylen dem Polymerisationsansatz für die wässerige Dispersion zugegeben wird.

9. Teppiche, welche mit einer oder mehreren Teppichbeschichtungs-Zusammensetzungen gemäß Anspruch 7 oder 8 im Vorstrich und/oder Zweitstrich beschichtet sind.

## Claims

1. Use of an aqueous dispersion of a vinyl acetate-ethylene copolymer, and of at least one polyethyleneimine, as binders in a carpet coating composition for producing carpets.

2. Use according to Claim 1, **characterized in that** the vinyl acetate-ethylene copolymer is obtained by radically initiated emulsion polymerization of 60 to 98 wt% of vinyl acetate and 2 to 30 wt% of ethylene, based in each case on the total weight of the comonomers, in an aqueous medium, the particulars in wt% adding up to 100 wt% in each case.

3. Use according to Claim 1 or 2, **characterized in that** the emulsion polymerization of the vinyl acetate-ethylene copolymer takes place in the presence of protective colloid or in the presence of emulsifier, or in the presence of a combination of protective colloid and emulsifier.

4. Use according to Claim 1 to 3, **characterized in that** the polyethyleneimine has a weight-average molecular weight of 500 g/mol to 1 000 000 g/mol.

5. Use according to Claim 1 to 3, **characterized in that** the polyethyleneimine has a weight-average molecular weight of 10 000 g/mol to 1 000 000 g/mol.

6. Use according to Claim 1 to 5, **characterized in that** the polyethyleneimine is included in the carpet coating composition in an amount of 0.1 to 10 wt%, based on the dry weight of the vinyl acetate-ethylene copolymer.

7. Carpet coating composition comprising an aqueous dispersion of a vinyl acetate-ethylene copolymer, and 0.1 to 10 wt% of at least one polyethyleneimine, based on the dry weight of the vinyl acetate-ethylene copolymer (dry/dry), and 100 to 1400 wt% of filler from the group consisting of kaolin, talc, fluorspar, fly ash, aluminum trihydrate and chalk, based on the dry weight of the vinyl acetate-ethylene copolymer (dry/dry), water, optionally one or more additives, and optionally one or more adjuvants.

8. Carpet coating composition according to Claim 7, obtained by mixing the aqueous dispersion of the vinyl acetate-ethylene copolymer and the polyethyleneimine fraction and then incorporating the fillers with stirring, or obtained by adding the polyethyleneimine to the polymerization mixture for the aqueous dispersion, before or during or after the polymerization of vinyl acetate and ethylene.

9. Carpet coated with one or more carpet coating compositions according to Claim 7 or 8 in the precoat and/or secondary coating.

## Revendications

1. Utilisation d'une dispersion aqueuse d'un copolymère d'acétate de vinyle-éthylène et d'au moins une polyéthylène-imine en tant que liant dans une composition de revêtement de tapis pour la fabrication de tapis.

2. Utilisation selon la revendication 1, **caractérisée en ce que** le copolymère d'acétate de vinyle-éthylène est obtenu par polymérisation en émulsion initiée radicalairement en milieu aqueux de 60 à 98 % en poids d'acétate de vinyle et 2 à 30 % en poids d'éthylène, à chaque fois par rapport au poids total des comonomères, la somme des données en % en poids étant à chaque fois de 100 % en poids.

3. Utilisation selon la revendication 1 ou 2, **caractérisée en ce que** la polymérisation en émulsion du copolymère d'acétate de vinyle-éthylène a lieu en présence d'un colloïde protecteur ou en présence d'un émulsifiant ou en présence d'une combinaison d'un colloïde protecteur et d'un émulsifiant.

4. Utilisation selon les revendications 1 à 3, **caractérisée en ce que** la polyéthylène-imine présente un poids moléculaire moyen en poids de 500 g/mol à 1 000 000 g/mol.

5. Utilisation selon les revendications 1 à 3, **caractérisée en ce que** la polyéthylène-imine présente un poids moléculaire moyen en poids de 10 000 g/mol à 1 000 000 g/mol.

6. Utilisation selon les revendications 1 à 5, **caractérisée en ce que** la polyéthylène-imine est contenue dans la composition de revêtement de tapis en une quantité de 0,1 à 10 % en poids, par rapport au poids sec du copolymère d'acétate de vinyle-éthylène.

7. Composition de revêtement de tapis contenant une dispersion aqueuse d'un copolymère d'acétate de vinyle-éthylène et 0,1 à 10 % en poids d'au moins une polyéthylène-imine, par rapport au poids sec du copolymère d'acétate de vinyle-éthylène (sec/sec), et 100 à 1 400 % en poids d'une charge du groupe constitué par le kaolin, le talc, la fluorine, les cendres volantes, le trihydrate d'aluminium et la craie, par rapport au poids sec du copolymère d'acétate de vinyle-éthylène (sec/sec), de l'eau, éventuellement un ou plusieurs additifs et éventuellement un ou plusieurs ajouts.

8. Composition de revêtement de tapis selon la revendication 7, qui est obtenue par mélange de la dispersion aqueuse du copolymère d'acétate de vinyle-éthylène et de la fraction de polyéthylène-imine, puis incorporation des charges, ou qui est obtenue par ajout de la polyéthylène-imine avant ou pendant ou après la polymérisation d'acétate de vinyle et d'éthylène à la préparation de polymérisation pour la dispersion aqueuse.

9. Tapis, qui sont revêtus avec une ou plusieurs compositions de revêtement de tapis selon la revendication 7 ou 8 dans la couche d'apprêt et/ou la deuxième couche.
